# EUROPÄISCHE PATENTSCHRIFT

(11) **EP 2 522 447 B1**
(45) Veröffentlichungstag und Bekanntmachung des Hinweises auf die Patenterteilung: **09.06.2021**
(21) Anmeldenummer: 12163012.3
(22) Anmeldetag: 03.04.2012
(51) Int. Cl.: B28D 1/14

(54) **Bohrer und Herstellungsverfahren**
Drill and manufacturing method
Foret et procédé de fabrication

(30) Priorität: 12.05.2011 DE 102011075769
(43) Veröffentlichungstag der Anmeldung: 14.11.2012
(73) Patentinhaber: HILTI Aktiengesellschaft, 9494 Schaan (LI)
(72) Erfinder: Bohn, Klaus-Peter, 9473 Gams (CH); Grasberger, Stefan, 6800 Feldkirch (AT); Kleine, Werner, 28832 Achim (DE)
(74) Vertreter: Hilti Aktiengesellschaft Corporate Intellectual Property

(56) Entgegenhaltungen:
- FR-A- 854 545
- GB-A- 1 120 732
- GB-A- 2 290 995
- US-A- 2 008 031
- US-A- 3 313 186
- US-A1- 2009 269 152

## Beschreibung

### GEBIET DER ERFINDUNG

Die vorliegende Erfindung betrifft einen Bohrer für einen bohrmeißelnden Abbau von Gestein oder mineralischen Materialien, gemäß dem Oberbegriff des Anspruchs 1. Ferner betrifft die Erfindung ein Herstellungsverfahren für einen Bohrer.

Ein Bohrmeißel für das Bearbeiten von Gestein, Beton, Mauerwerk und ähnlich spröder Materialien ist beispielsweise aus der offengelegten Patentanmeldung US 2001 006122 bekannt. Der Bohrmeißel hat einen rohrförmigen Schaft mit einem koaxial verlaufenden Durchgangskanal. Über eine Querbohrung zu dem Durchgangskanal ist eine Absaughülse gestülpt, welche nahe dem Einsteckende angeordnet ist. Das seitens eines Bohrkopfs erzeugte Bohrgut kann durch den Durchgangskanal abgesaugt werden.

Ein Bohrer gemäß dem Oberbegriff von Anspruch 1 ist aus US 3,313,186 A bekannt. US 3,313,186 A beschreibt einen Bohrer für die spanende Metallbearbeitung. Der Bohrer hat scharfe Schneiden und eine Förderwendel zum Abtransport von Spänen. Typisch für die spanende Metallbearbeitung müssen die Schneiden während des Bohrens gekühlt werden. Der Bohrer hat hierzu geschlossene Kanäle, über welche Schneidöl (Kühlflüssigkeit) zu den Schneiden gepumpt werden kann. In die Wendelrücken sind längs verlaufende Vertiefungen eingelassen, in welche Schläuche eingelegt sind. Die Schläuche werden durch den Druck des Schneidöls in Position gehalten.

US 2009/0269152 A1 beschreibt einen Bohrer für die Bearbeitung von faserhaltigen Verbundstoffen. Eine Stanzhülse hat stirnseitig eine Schneide mit ein oder mehreren Schneidezähnen. Die Stanzhülse wird um ihre Längsachse drehend angetrieben. Innerhalb der Stanzhülse ist eine Förderwendel, welche das abgeschnittene Material abtransportiert. Das Material wird über einen seitlichen Sauganschluss an einem oberen Ende der Stanzhülse mittels einer Pumpe abgesaugt.

### OFFENBARUNG DER ERFINDUNG

Der erfindungsgemäße Bohrer ist eine Abkehr des bisher gängigen Aufbaus der Absaugbohrers. Der erfindungsgemäße Bohrer weist die Merkmale von Anspruch 1 auf.

Der Schaft ist mehrteilig ausgebildet. Der Grundkörper bindet den Bohrkopf an und dient im Wesentlichen der Übertragung eines Drehmoments, ggf. axialer Stöße von einer Werkzeugmaschine auf den Bohrkopf. Der Kanal verläuft außerhalb des Grundkörpers. Der Aufsatz, welcher an einer Mantelfläche befestigt, ergo nicht oder nur teilweise von dem Grundkörper umschlossen ist, schließt den Kanal in radialer Richtung nach Außen ab. Der Kanal kann parallel zu der Achse sein und ist dennoch zu der Achse versetzt angeordnet.

Der Bohrer hat längs einer Achse zwischen dem Bohrkopf und einem Einsteckende einen Schaft mit dem innenliegenden Kanal. Der Kanal ist durch den Grundkörper des Schafts und einer Abdeckung, die an einer Mantelfläche des Grundkörpers anliegt, umschlossen. Die Abdeckung ist vollständig innerhalb einer umschreibenden, zylindrischen Hüllkurve des Grundkörpers angeordnet.

Eine Ausgestaltung sieht vor, dass die Mantelfläche des Grundkörpers wenigstens ein längs der Achse ausgedehntes, in Umfangsrichtung konkaves Segment aufweist und der Aufsatz an dem konkaven Segment anliegt. Eine Mantelfläche des Grundkörpers ist im Bereich des konkaven Segments gegenüber den benachbarten Bereichen zurückgesetzt. Die benachbarten Bereiche definieren den äußeren Radius des Grundkörpers, sprich den Rotationskörper und die Hüllkurve. Der Aufsatz anliegend an dem radial zurückgesetzten Abschnitt der Mantelfläche liegt vollständig innerhalb der Hüllkurve.

Der Kanal kann durchgehend von einer ersten Öffnung zu einer zweiten Öffnung verlaufen. Die erste Öffnung ist an einem Ende des Schafts, welches an den Bohrkopf angrenzt, die zweite Öffnung ist an einem Ende des Schafts, welches an ein Einsteckende des Bohrers angrenzt. Der Kanal verläuft im wesentlichen über die gesamte Länge des Schafts. Der Kanal ist vorzugsweise gleich einem Rohr über seine gesamte Länge umfänglich geschlossen. Der Aufsatz kann von der ersten Öffnung bis zu der zweiten Öffnung ausgedehnt sein. Der Kanal wird somit durch den Aufsatz über die gesamte Länge abgeschlossen. Die erste Öffnung kann in einer Stirnseite des Schafts liegen.

Eine Ausgestaltung sieht vor, dass Aufsatz eine plattenförmige Abdeckung enthält, die an zwei in Umfangsrichtung beabstandeten, einander zugewandten Flanken des konkaven Segmentes anliegt. Die Abdeckung ist plattenförmig, d.h. ihre Wandstärke oder Abmessung in radialer Richtung ist deutlich geringer, z.B. geringer als 20 %, als ihre Abmessungen in Umfangsrichtung oder längs einer Achse des Bohrers. Die Abdeckung liegt vorzugsweise durchgehend längs ihrer Abmessung längs der Achse an den Flanken an. Insbesondere liegt die Abdeckung längs der gesamten Erstreckung der Flanken an diesen an. Der Kanal ist vorzugsweise durchgehend längs seiner Erstreckung zwischen den beiden Öffnungen umfänglich geschlossen. Ein Luftstrom kann aus dem Kanal nur an den Öffnungen an den Enden des Schafts austreten. Eine zu einer Achse des Bohrers weisende Fläche der Abdeckung und das konkave Segment sind Innenflächen des Kanals. Die Abdeckung ist zwischen den beiden Flanken von der Mantelfläche beabstandet, um zusammen mit der Mantelfläche den Kanal auszubilden. Die Abdeckung kann aus einem anderen Material als der Grundkörper sein, insbesondere kann die Abdeckung aus einem Kunststoff hergestellt sein.

Eine Ausgestaltung die nicht Teil der vorliegenden Erfindung ist, sieht vor, dass der Aufsatz einen rohrförmigen Hohlkörper enthält. Der rohrförmige Hohlkörper kann ein steifes Rohr, ein flexibler Schlauch, ein flexibler Schlauch mit versteifen Enden, etc. sein. Ein beispielhafter rohrförmiger Hohlkörper hat an zwei Enden jeweils eine Öffnung. Umfänglich zu einer einer Verbindunglinie der beiden Enden ist der Hohlkörper entlang der gesamten Verbindungslinie vollständig geschlossen. Der rohrförmige Hohlkörper ist mit einer Außenfläche an dem konkaven Segment befestigt. Die umfänglich geschlossene Innenfläche bildet die Innenfläche des Kanals aus. Eine Abmessung des rohrförmigen Hohlkörpers längs einer Achse des Bohrers entspricht einer Abmessung des konkaven Segments längs der Achse. Der rohrförmige Hohlkörper erstreckt sich im wesentlichen über die gesamte Länge des Schafts. Der rohrförmige Hohlkörper kann aus einem anderen Material und mit einer anderen Struktur als der Grundkörper ausgebildet sein. Insbesondere kann der rohrförmige Hohlkörper aus einem textilen Gewebe, aus natürlichen oder synthetischen Fasern, einem in eine Form gespritzten Kunststoff sein.

Eine Ausgestaltung sieht vor, dass der Grundkörper ein Vollkörper ist. Insbesondere hat der Grundkörper keine längs seiner Achse verlaufende Hohlräume. Ein durch den sich um die Achse drehenden Grundkörper definierter Rotationskörper definiert einen äußeren Radius, und eine in den Grundkörper eingeschriebener, die Mantelfläche berührende, zylindrische Seele definiert einen inneren Radius des Grundkörpers. Der innere Radius beträgt vorzugsweise zwischen 25 % und 75 % des äußeren Radius. Eine Spitze des Bohrkopfs stützt sich längs der Achse auf der massiven Seele ab. Beim Meißeln erfährt die Spitze die größten Belastungen in axialer Richtung, durch den Aufbau des Bohrers können die Stoßwellen in optimaler Weise rein axial zwischen der belasteten Spitze und einer Werkzeugmaschine übertragen werden.

Das erfindungsgemäße Herstellungsverfahren für einen Bohrer enthält die Schritte von Anspruch 11. Eine Rille wird in einen zylindrischen Rohling eingebracht, wobei die Rille längs einer Achse des Rohlings orientiert ist. Die Rille kann beispielsweise durch Umformen des Rohlings, insbesondere durch Längswalzen, Fließpressen oder Verjüngen erzeugt werden. Die Rille verläuft vorzugsweise über wenigstens die Hälfte der Länge des aus dem Rohling herzustellenden Bohrers. Auf die Rille wird eine Aufsatz aufgebracht. Zwischen dem Aufsatz und der Mantelfläche wird ein längs der Rille verlaufender Kanal ausgebildet. Der Aufsatz wird vollständig innerhalb einer den Grundkörper umschreibenden zylindrischen Hüllkurve angeordnet. Die Rille wird ausreichend tief ausgebildet, damit der nachträglich aufgebrachte Aufsatz nicht über das ursprüngliche Volumen des Rohlings hinausragt. Auf der Stirnseite des Rohlings wird ein Schneidelement angeordnet.

Eine Ausgestaltung sieht vor, dass Rohling nach dem Einbringen der Rillen auf eine Länge des herzustellenden Bohrers abgelängt wird. Der Rohling kann beispielsweise ein Endlosdraht sein, in den die Rillen und ggf. auch längs der Achse geschlossene Nuten für eine Drehmitnahme eingewalzt werden. Nach dem Walzen wird der Endlosdraht auf die Länge der Bohrer zerschnitten.

Der Aufsatz kann getrennt von dem Rohling herstellt und dann mit dem Rohling verbunden werden. Der Aufsatz wird in die Rille eingesetzt. Dabei wird der Aufsatz materialschlüssig und/oder formschlüssig befestigt, z.B. durch einklemmende Vorsprünge oder Kleber. Alternativ kann der Aufsatz in der Rille ausgebildet werden, z.B. kann ein Opferkörper auf die Rille aufgebracht werden, der Opferkörper zum Ausbilden des Aufsatzes umspritzt werden und anschließend der Opferkörper zum Ausbilden des Kanals entfernt werden. Der Opferkörper hat die komplementären Abmessungen zu dem Kanal. Der Opferkörper kann beispielsweise aus Paraffin oder einem anderen durch Lösungsmittel auswaschbaren Material sein.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer in einer Seitenansicht,
- Fig. 2: den Bohrer 90 Grad gegenüber Fig. 1 gedreht; teilweise angeschnitten,
- Fig. 3: eine Draufsicht auf einen Bohrkopf des Bohrers;
- Fig. 4: einen Querschnitt in der Ebene IV-IV durch einen Schaft des Bohrers;
- Fig. 5: einen Querschnitt in der Ebene V-V durch den Schaft des Bohrers;
- Fig. 6: einen Querschnitt durch einen Schaft eines Bohrers;
- Fig. 7: einen Querschnitt durch einen Schaft eines Bohrers;
- Fig. 8: einen Querschnitt durch einen Schaft eines Bohrers;
- Fig. 9: einen Bohrer die nicht Teil der vorliegenden Erfindung ist, in einer Seitenansicht,
- Fig. 10: den Bohrer 90 Grad gegenüber Fig. 9 gedreht; teilweise angeschnitten,
- Fig. 11: einen Querschnitt in der Ebene XI-XI durch einen Schaft des Bohrers;
- Fig. 12: einen Querschnitt in der Ebene XII-XII durch den Bohrer;
- Fig. 13: einen Bohrer in einer Seitenansicht,
- Fig. 14: einen Bohrer in einer Seitenansicht,
- Fig. 15: einen Querschnitt in der Ebene XV-XV durch einen Schaft des Bohrers;
- Fig. 16: einen Querschnitt in der Ebene XVI-XVI durch den Bohrer;

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

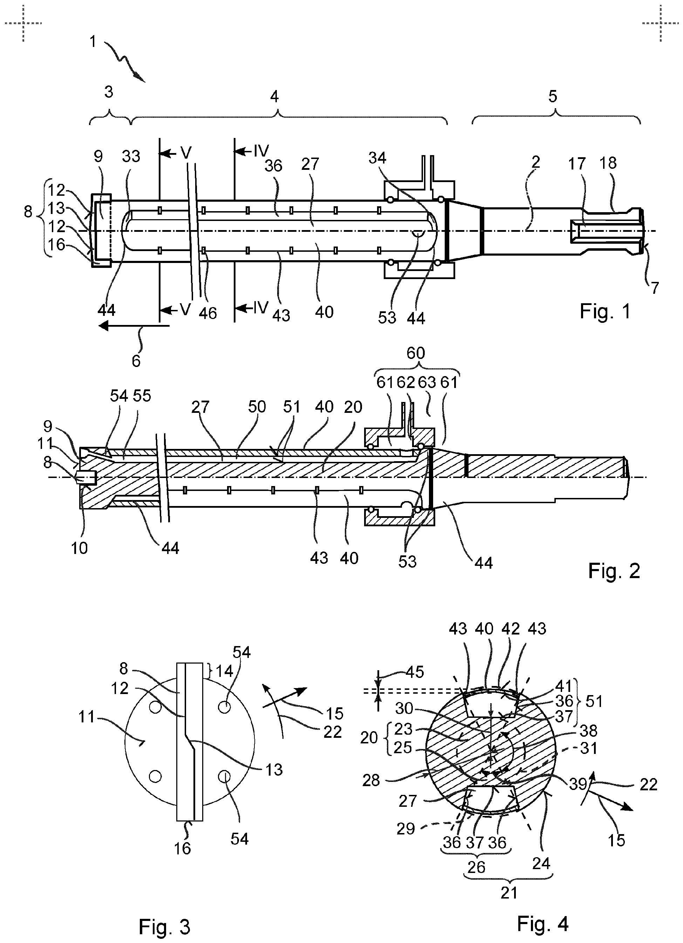

Fig. 1 zeigt einen beispielhaften Bohrer **1** für mineralische Materialien, z.B. Naturstein oder Beton in einer Seitenansicht. Fig. 2 zeigt den Bohrer **1** um 90 Grad um eine Achse **2** des Bohrers **1** gedreht, wobei in einer oberen Bildhälfte der Bohrer **1** in der Ebene II-II angeschnitten dargestellt ist. Fig. 3 zeigt eine Draufsicht auf einen Bohrkopf **3** des Bohrers **1.** Fig. 4 zeigt einen senkrecht zu der Achse **2** orientierten Querschnitt durch einen Schaft **4** des Bohrers **1.** Der Bohrkopf **3,** der Schaft **4** und ein Einsteckende **5** des Bohrers **1** sind längs der Achse **2** aufeinanderfolgend angeordnet. Der Bohrer **1** kann mit dem Einsteckende **5** in eine Werkzeugmaschine eingesetzt werden. Die Werkzeugmaschine dreht den Bohrer **1** um die Achse **2;** der Anwender oder ein maschineller Vortrieb bewegen während dessen den Bohrer 1 längs seiner Achse **2** in Bohrrichtung **6.** Die Bohrrichtung **6** dient der Beschreibung einer Orientierung längs der Achse **2,** wobei in Bohrrichtung eine Richtung von dem Einsteckende **5** zu dem Bohrkopf **3** bezeichnet. Der dargestellte Bohrer **1** ist für drehmeißelnde Werkzeugmaschinen ausgelegt, welche zusätzlich zu der Drehbewegung auf eine Stirnseite **7** des Einsteckendes **5** periodische Schläge in Bohrrichtung **6** ausüben.

Der Bohrkopf **3** hat einen Schneidkörper **8,** welcher in einem Sitz **9** eingefügt ist. Der Schneidkörper **8** aus einem gesinterten Hartmetall ist. Ein geeignetes Hartmetall enthält beispielsweise Wolframcarbid. Der Sitz **9** ist vorzugsweise aus einem Stahl. Der Sitz **9** kann einen Schlitz **10** in einer in Bohrrichtung **6** weisenden Stirnseite **11** aufweisen. Der beispielsweise plattenförmige Schneidkörper **8** ist in den Schlitz **10** eingesetzt. Der Schneidkörper **8** hat zwei in Bohrrichtung **6** weisende (Meißel-) Kanten **12,** die sich von einer Spitze **13,** welche auf der Achse **2** liegt, ohne Unterbrechung radial nach außen erstrecken. Die Spitze **13** überragt vorzugsweise radial äußere Bereiche der Kanten **12** in Bohrrichtung **6.** Die Kante **12** dachförmig ausgebildet sind. Die Kanten **12** fallen ausgehend von der Spitze **13** zu ihren radial außen liegenden Enden **14** monoton entgegen der Bohrrichtung **6** ab. Eine Neigung der Kanten **12** gegenüber der Achse **2** kann in einem Bereich nahe der Spitze **13** geringer als in einem radial äußeren Bereich sein. Die Kante **12** kann im radial äußeren Bereich beispielsweise nahezu senkrecht zu der Achse **2** sein. Die beiden die Spitze **13** ausbildenden Kanten **12** werden auch als Hauptschneiden bezeichnet. Die radial äußeren Enden **14** der Kanten **12** überragen den Sitz **9** in radialer Richtung **15.** An die in Bohrrichtung **6** weisende Meißelkante **12** schließt sich eine im wesentlichen zu der Achse **2** parallele Schabkante **16** an. Die Schabkante **16** steht radial über den Sitz **9** hinaus. Während die Meißelkanten **12** das Gestein meißelnd zertrümmern, sorgt die Schabkante **16** für einen kreisförmigen Querschnitt eines Bohrlochs.

Anstelle des dargestellten Bohrkopfs **3** kann dieser auch zwei gekreuzte Schneidkörper aufweisen. Sogenannte Nebenschneiden sind unter einem Winkel zwischen 60 Grad und 120 Grad zu den Hauptschneiden orientiert sein. Der Bohrkopf kann vollständig aus einem Hartmetall hergestellt sein. Der Bohrkopf hat eine rückseitige Stirnseite, die etwa so groß wie eine Stirnseite des Schafts **4** ist. Der Bohrkopf kann materialschlüssig, z.B. durch Schweißen oder Löten auf dem Schaft **4** befestigt sein.

Das dargestellte Einsteckende **5** ist speziell für einen drehmeißelnden Bohrer **1** ausgelegt. Der im Wesentlichen zylindrische Abschnitt am Ende des Bohrers **1** hat einen Durchmesser, welcher dem festen Innendurchmesser eine Werkzeugaufnahme handelsüblicher Werkzeugmaschinen entspricht. Die Werkzeugaufnahmen können Stege oder Bolzen für eine verbesserte Drehmomentübertragung aufweisen, welche in entsprechende Nuten **17** für eine Drehmitnahme des Einsteckendes **5** eingreifen. Die axial offene Nuten **17** sind entgegen der Bohrrichtung **6** offen, indem sie bis zu der Stirnseite **7** des Bohrers reichen. Eine Verriegelung des Bohrers **1** kann in der Werkzeugaufnahme durch weitere längs der Achse **2** axial geschlossene Nuten **18** für eine Verrieglung des Einsteckendes **5** erfolgen. Andere Bohrer **1** können ein rein zylindrisches Einsteckende ohne Nuten oder ein Einsteckende mit vorstehenden Flügeln statt der Drehmitnahme-Nuten haben.

Der Bohrkopf **3** und das Einsteckende **5** sind starr über den Schaft **4** verbunden. Der Schaft **4** überträgt ein Drehmoment von dem Einsteckende **5** auf den Bohrkopf **3,** ggf. auch einen axialen Impuls von dem Einsteckende **5** auf den Bohrkopf **3.** Der Bohrkopf **3** kann für die Länge (Abmessung längs der Achse **2**) des Schaftes **4** in ein Bohrloch eingeführt werden. Zweckmäßigerweise ist der Schaft **4** ein Vielfaches länger als der Bohrkopf **3.**

Der Schaft **4** hat einen tragenden Grundkörper **20,** der an den Bohrkopf **3** und das Einsteckende **5** angebunden ist. Bei dem dargestellten Beispiel sind der Sitz **9** des Bohrkopfs **3,** der Grundkörper **20** des Schaftes **4** und das Einsteckende **5** ein monolithischer Stab, d.h. ohne Fügezonen zusammenhängender Stab. Der Stab kann durch Umformen, z.B. Walzen, Prägen, Stauchen, aus einem Rohling hergestellt sein. Alternativ können der Bohrkopf **3** und/oder das Einsteckende **5** an dem Grundkörper **20** befestigt werden.

Der Grundkörper **20** ist ein Stab mit einem im Wesentlichen längs der Achse **2** gleichbleibenden Profil, d.h. einer gleichbleibenden Form eines Schnitts senkrecht zur Achse **2.** Stirnseiten des Grundkörpers **20** sind längs senkrecht zu der Achse **2** orientiert. Eine geschlossene und zusammenhängende Mantelfläche **21** umgibt den Grundkörper **20** in Umfangsrichtung **22** bezogen auf die Achse **2.** Ein von der Mantelfläche **21** und den Stirnflächen abgeschlossenes Volumen ist bei dem als Vollkörper ausgebildeten Grundkörper **20** mit einem Material, z.B. Stahl ausfüllt. Der Grundkörper **20** hat keinen Hohlraum, ist insbesondere kein Rohr.

Der dargestellte Grundkörper **20** hat zwei konvexe Sektoren **23,** welche durch die Achse **2** und ein konvexes Segment **24** der Mantelfläche **21** des Grundkörpers **20** aufgespannt sind. Das konvexe Segment **24** der Mantelfläche **21** kann durch gewölbte, z.B. zylindrische, oder ebene Flächen gebildet sein. Jeweils ein konkaver Sektor **25,** aufgespannt durch die Achse **2** und ein konkaves Segment **26** der Mantelfläche **21,** ist in Umfangsrichtung **22** zwischen den konvexen Sektoren **23** angeordnet. Der Grundkörper **20** kann beispielsweise durch Ausbilden von Rillen **27** in einen vollen, zylindrischen Rohling hergestellt werden. Die Anzahl der Rillen **27** bzw. konkaven Sektoren **25** kann beliebig zwischen ein und sechs, vorzugsweise geradzahlig gewählt sein. Der Grundkörper **20** ist vorzugsweise drehsymmetrisch aufgebaut; die konvexen Sektoren **23** sind zueinander gleich und die konkaven Sektoren **25** sind zueinander gleich ausgebildet.

Ein äußerer Radius **28** des Grundkörpers **20** ist durch den radialen Abstand der konvexen Segmente **24** von der Achse **2** definiert. Eine den Grundkörper **20** umschreibende zylindrische Hüllkurve **29,** welche sich durch eine Rotation des Grundkörpers **20** um die Achse **2** ergibt, hat einen Radius gleich dem äußeren Radius **28.** Ein innerer Radius **30** ist der geringste radiale Abstand der konkaven Segmente **26** von der Achse **2.** Der Grundkörper **20** hat somit eine vollständig in den Grundkörper **20** eingeschriebene, zylindrische Seele **31** mit dem inneren Radius **30,** welche konzentrisch zu der Achse **2** ist. Das Verhältnis des inneren Radius **30** zu dem äußeren Radius **28** liegt im Bereich zwischen 25 % und 75 %.

Die konkaven Sektoren **25** bzw. die komplementären Rillen **27** erstrecken sich im wesentlichen über die gesamte Länge **32** des Grundkörpers **20** oder des Schaftes **4.** Die Rillen **27** haben längs der Achse **2** jeweils ein vorderes Ende **33** in Bohrrichtung **6,** vorzugsweise nahe dem Bohrkopf **3,** und ein hinteres Ende **34** entgegen der Bohrrichtung **6,** vorzugsweise nahe dem Einsteckende **5.** Die Rillen **27** verbinden ohne Unterbrechung ihr jeweils vorderes Ende **33** und ihr jeweils hinteres Ende **34.** Eine Länge **35** der Rillen **27,** d.h. der Abstand des vorderen Endes **33** zu dem hinteren Ende **34** gemessen längs der Achse **2** entspricht vorzugsweise wenigstens 90 % der Länge 32 des Grundkörpers **20** oder des Schaftes **4.**

Das dargestellte konkave Segment 26 hat die komplementäre Form eines Trapezes. Das konkave Segment **26** hat zwei einander zugewandte Flanken **36.** Die Flanken **36** verlaufen wenigstens teilweise in radialer Richtung, z.B. schließen sie einen Winkel von 0 Grad bis 60 Grad, z.B. bis 45 Grad, bis 30 Grad mit der radialen Richtung ein. Die beiden Flanken **36** begrenzen einen zwischen ihnen liegenden Hohlraum. Die beispielhaften Flanken **36** verlaufen beispielsweise parallel zu der Achse **2.** Ein Boden **37** des Segments **26,** welcher die beiden Flanken **36** miteinander verbindet, kann konkav, eben oder teilweise konvex ausgebildet sein. Die Übergänge zwischen den Flanken **36** und dem Boden **37** können abgerundet sein, mögliche Abwandlungen des konkaven Segmentes **26** sind z.B. die komplementären Formen eines Segmentes eines Kreise, einer Ellipse und eines Ovals.

Ein Anteil der konvexen Segmente **24** an einem Umfang des Grundkörpers **20** ist größer als 25 %, z.B. größer als 50 % und geringer als 75 %. Der Umfang kann auf die Hüllkurve **29** bezogen werden. Die Summe der Mittelpunktswinkel **38** der beiden zylindrischen Sektoren **23** liegt im Bereich zwischen 90 Grad und 270 Grad. Die Größe des Mittelpunktswinkels **38** wird auf die Ausdehnung des konvexen Segments **24** der Mantelfläche **21** bezogen. Die Mittelpunktswinkel **39** der konkaven Sektoren **25** summiert sich auf den verbleibenden Teil von 360 Grad.

Auf jeden der konkaven Sektoren **25** ist eine Abdeckung **40** aufgesetzt. Die beispielhaft dargestellte Abdeckung **40** ist eine lange, dünne Schale. Die Abdeckung **40** hat eine zur Achse **2** zugewandte Fläche **41,** eine von der Achse **2** abgewandte Fläche **42,** zwei die Abdeckung **40** in Umfangsrichtung **22** abschließende Längskanten **43,** und zwei die Abdeckung **40** längs der Achse **2** abschließende Stirnseiten **44.** Eine Länge der Abdeckung **40,** d.h. ein Abstand der Stirnseiten **44** oder eine Abmessung der Längskanten **43** längs der Achse **2,** ist etwa gleich der Länge **35** des konkaven Segments **26** oder der Rille 27. Die Stirnseiten **44** der Abdeckung **40** überlappen mit den Enden **33, 34** der Rille **27** oder decken diese Enden **33, 34** vollständig ab. Die Flächen **41, 42** sind beispielhaft gewölbt, bezogen auf die Achse **2** konvex gewölbt. In einer nicht dargestellten Ausführungsform können ein oder beide Flächen **41, 42** eben ausgebildet sein. Die Abdeckung **40** kann beispielsweise aus einem Kunststoff oder einem metallischen Blechstreifen hergestellt sein.

Die Abdeckung **40** ist innerhalb der Hüllkurve **29,** d.h. dem Rotationskörper des Grundkörpers **20** angeordnet. Bei der beispielhaft in Fig. 3 dargestellten Abdeckung **40** ist die gesamte nach außen weisende Fläche **42** von der Hüllkurve **29** beabstandet. In einer Ausgestaltung berührt beispielsweise die Längskante **43** von innen die Hüllkurve **29.** Eine Stärke **45** der Abdeckung **40,** d.h. der Abstand der gegenüberliegenden Flächen **41, 42,** ist deutlich geringer, z.B. geringer 20 %, einer Differenz des äußeren Radius **28** und des inneren Radius **30** des Grundkörpers **20.**

Jeder der beiden, vorzugsweise parallelen, Längskanten **43** berührt die Mantelfläche **21** des konkaven Segments **26** durchgehend entlang einer Berührungslinie. Die Berührungslinie ist vorzugsweise so lang wie die Längskanten **43.** Bei der dargestellten Ausführungsform berühren auch die Stirnseiten **44** die Mantelfläche **21,** wodurch die Berührungslinien zu einer ringförmigen Linie geschlossen sind.

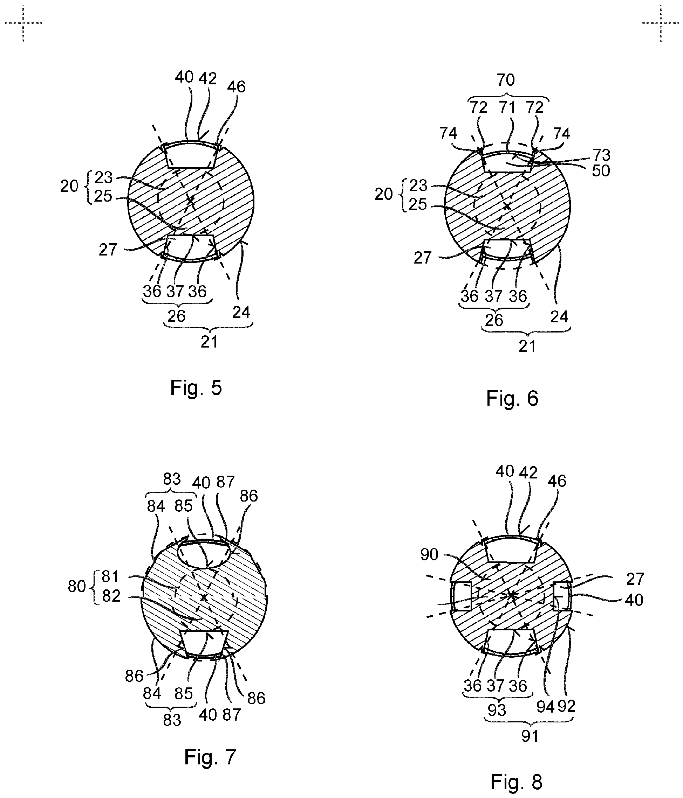

Die Abdeckung **40** kann an dem konkaven Segment **26** formschlüssig befestigt sein. Längs der Achse **2** sind mehrere in Umfangsrichtung **22** vorspringende Nasen **46** an den Flanken **36** vorgesehen, welche an der von der Achse **2** abgewandten Fläche **42** der Abdeckung **40** anliegen (vgl. Fig. 5). Die Nasen **46** können beispielsweise durch lokales Einkerben des Grundkörpers **20** in Grenzbereichen der konvexen Segmente **24** und der konkaven Segmente **26** eingebracht werden, nachdem die Abdeckung **40** auf das konkave Segment **26** aufgelegt wird.

Die zur Achse **2** gewandte Fläche **41** ist von der Mantelfläche **21** beabstandet. Insbesondere ist ein die beiden Stirnseiten **44** durchgehend verbindender, z.B. streifenförmiger, Abschnitt der Fläche **41** von der Mantelfläche **21** beabstandet. Der Grundkörper **20** und die Abdeckung **40** umschließen somit einen sich längs der Achse **2** erstreckenden Kanal **50.** Der rohrförmige oder geschlossene Kanal **50** hat entlang seiner gesamten Länge eine umfänglich geschlossene Innenwand **51.** Die Innenwand **51** wird beispielsweise durch die Flanken **36,** den Boden **37** und durch die Abdeckung **40,** insbesondere deren zur Achse **2** zugewandte Fläche **41** gebildet.

Der beispielhafte Kanal **50** hat genau eine Ansaugöffnung **53** und eine Absaugöffnung **54,** welche er miteinander verbindet. Die Ansaugöffnung **53** ist beispielsweise durch eine radiale Öffnung in der Abdeckung **40** ausgebildet. Die Ansaugöffnung **53** ist vorzugsweise in der Nähe des Einsteckendes **5** angeordnet, ein Abstand der Ansaugöffnung **53** zu dem Einsteckende-seitigem Ende der Rille **27** ist z.B. geringer als 10 % der Länge der Rille **27.** Die dargestellte Absaugöffnung **54** ist an der Stirnseite **11** des Bohrkopfs **3** ausgebildet. Eine Bohrung **55** durch den Bohrkopf **3,** beispielsweise den Sitz **9,** verbindet die Absaugöffnung **54** mit der Rille **27.** Die Bohrung **55** kann zu der Achse **2** geneigt sein. Der Kanal **50** kann auch in einem Grenzbereich zwischen Bohrkopf **3** und Schaft **4** radial nach außen treten und dort die Absaugöffnung **54** ausbilden.

Eine Manschette **60** kann über den Schaft **4** im Bereich der Ansaugöffnung **53** gestülpt sein. Die Manschette **60** hat beispielsweise zwei zueinander axiale versetzte ringförmige Dichtungselemente **61,** zum Beispiel O-Ringe. Die Dichtungselemente **61** können bündig mit dem Schaft **4** abschließen. Die Manschette **60** ist derart aufgesetzt, dass die Ansaugöffnung **53** längs der Achse **2** zwischen den Dichtungselementen **62** angeordnet ist. Ein ringförmig um die Ansaugöffnung **53** ausgebildeter Hohlraum **63** kann über einen Anschlussstutzen **64** mit einer Pumpe oder einer anderen Luftfördereinrichtung verbunden werden.

Fig. 6 zeigt einen Querschnitt durch einen Schaft **4** einer weiteren beispielhaften Ausführungsform eines Bohrers **1.** Auf eine Wiederholung einer Beschreibung der übereinstimmenden Merkmale dieser und der vorhergehenden Ausführungsformen wird verzichtet. Soweit die nachfolgende Beschreibung keine Unterschiede aufzeigt, ist von einem identischen oder analogen Aufbau der nicht beschriebenen Merkmale auszugehen, insbesondere wenn mit den vorherigen Ausführungsformen übereinstimmende Bezugszeichen gewählt sind.

Auf den konkaven Segmente **26** des Grundkörpers **20** liegt eine längliche Abdeckung **70** auf. Die beispielhaft dargestellte Abdeckung **70** hat ein Profil mit einem Steg **71** und zwei Querteilen **72.** Der zwischen den Querteilen **72** angeordnete Steg **71** kann gleich der Abdeckung **40** der vorhergehenden Ausführungsform ausgebildet sein. Insbesondere deckt der Steg **71** das konkave Segment **26** entlang dessen gesamter Länge **35** oder wenigstens 90 % dessen Länge **35** ab. Der Steg **71** hat vorzugsweise eine geringe Stärke und kann schalenförmig gewölbt sein. Der geschlossene Kanal **50** wird durch die der Achse **2** zugewande Fläche **73** des Stegs **71** und das konkave Segment **26** umfänglich abgeschlossen.

Die Querteile **72,** auch als Flansch bezeichnet, schließen sich an Längskanten **74** des Stegs **71** an. Die Querteile **72** sind gegenüber dem Steg **71** angewinkelt, z.B. im Bereich zwischen 70 Grad und 20 Grad geneigt. Die dargestellten Querteile **72** überragen den Steg **71** in radialer Richtung sowohl in von der Achse 2 abgewandter als auch der Achse **2** zugewandter Richtung, wodurch sich ein Doppel-T-förmiges Profil ergibt. In einer nicht dargestellten Ausführungsform können die Querteile **72** über den Steg **71** alternativ in Richtung zu der Achse **2** oder von der Achse **2** weg vorstehen.

Die Querteile **72** können sich entlang der gesamten Länge des Stegs **71** und der Abdeckung **70** erstrecken. Eine alternative Ausführungsform sieht mehrere laschenförmige Querteile **72** mit einer geringeren Länge als der Steg **71** vor, die längs des Stegs **71** aufeinanderfolgend angeordnet sind. Zwischen den laschenförmigen Querteilen **72** können Lücken sein oder sie können unmittelbar aneinandergrenzen.

Die Querteile **72** liegen vorzugsweise flächenmäßig bündig an den Flanken **36** des konkaven Segmentes **26** an. Die große Anlagefläche der Querteile **72** erhöht eine Haltekraft der Abdeckung **70** an der Mantelfläche **21** durch Form- und/oder Materialschluss. Weiteres kann eine verbesserte Versiegelung des Kanals **50** entlang der Nahtlinie zwischen der Abdeckung **70** und dem Grundkörper **20** erwartet werden.

Der Steg **71** ist vorzugsweise aus einem steifen Material, vorzugsweise aus einem Kunststoff oder Metall. Die Querteile **72** können aus einem elastischen Material, z.B. Gummi, sein. Die Abdeckung **70** kann durch einen Presssitz an dem konkaven Segment **26** befestigt sein.

Ferner kann die Abdeckung **70** eingeklebt sein, durch Nasen **46** oder andere Mittel formschlüssig gehalten sein.

Die gesamte Abdeckung **70** einschließlich der teilweise radial orientierten Querteile **72** ist innerhalb der zylindrischen Hüllkurve **29** des Grundkörpers **20** angeordnet. Die Abdeckung **70** überragt nicht den durch den sich um die Achse **2** drehenden Grundkörper **20** definierten Rotationskörper.

Fig. 7 zeigt in einer oberen Bildhälfte einen halben Querschnitt durch einen Schaft **4** einer weiteren beispielhaften Ausführungsform eines Bohrers **1** und in einer unteren Bildhälfte einen halben Querschnitt eines alternativen Schafts **4.** Auf eine Wiederholung einer Beschreibung der übereinstimmenden Merkmale dieser und der vorhergehenden Ausführungsformen wird verzichtet. Soweit die nachfolgende Beschreibung keine Unterschiede aufzeigt, ist von einem identischen oder analogen Aufbau der nicht beschriebenen Merkmale auszugehen, insbesondere wenn mit den vorherigen Ausführungsformen übereinstimmende Bezugszeichen gewählt sind.

Ein Grundkörper **80** hat zwei konvexe Sektoren **81** und zwischen den konvexen Sektoren **82** jeweils einen konkaven Sektor **82.** Die Mantelfläche **83** des Grundkörpers **80** hat entsprechend sich längs des Umfangs abwechselnd konvexe Segmente **84** und konkave Segmente **85.** Die konvexen Segmente **84** können durch eine zylindrische gewölbte oder ein ebene Flächen ausgebildet sein. Die Abmessungen der Sektoren **81, 82** bzw. der zugehörigen Segmente **84, 85** können in Übereinstimmung mit den vorhergehend beschriebenen Ausführungsformen gewählt werden.

Das konkave Segment **85** hat zwei aufeinander zuweisende Flanken **86,** welche an die konvexen Segmente **84** angrenzen. Die Flanken **86** können, wie dargestellt durch ebene Flächen, oder durch gekrümmte Flächen ausgebildet sein. Ein Winkel der Flanken **86** zu der radialen Richtung ist geringer als 60 Grad, vorzugsweise geringer als 45 Grad, z.B. geringer als 30 Grad. Das konvexe Segment **84** hat in Umfangsrichtung **22** überhängende Abschnitte **87.** Die überhängenden Abschnitte **87** der gegenüberliegenden Flanken **86** nähern sich in einer Richtung von der Achse **2** radial nach außen laufend längs der Umfangsrichtung **22** an. Das konkave Segment **85** umschließt einen radial offenen Hohlraum umfänglich um mehr als 180 Grad.

Eine Abdeckung **40** ist in das konkave Segment **85** eingesetzt und berührt die aufeinander zuweisenden Flanken **86.** Das konkave Segment **85** und die Abdeckung bilden einen Kanal **50** aus, welches sich längs der Achse **2** erstreckt.

Fig. 8 zeigt einen Querschnitt durch einen Schaft **4** einer weiteren beispielhaften Ausführungsform eines Bohrers **1.** Auf eine Wiederholung einer Beschreibung der übereinstimmenden Merkmale dieser und der vorhergehenden Ausführungsformen wird verzichtet. Soweit die nachfolgende Beschreibung keine Unterschiede aufzeigt, ist von einem identischen oder analogen Aufbau der nicht beschriebenen Merkmale auszugehen, insbesondere wenn mit den vorherigen Ausführungsformen übereinstimmende Bezugszeichen gewählt sind. Ein Grundkörper **90** des Schafts **4** hat längs der Achse **2** vier Rillen **27.** Die Rillen **27** unterteilen eine Mantelfläche **91** des Grundkörpers **90** in Umfangsrichtung **22** in vier konvexe Segmente **92** und vier konkave Segmente **93, 94.** Abdeckungen **40** verschließen die Rillen **27** in radialer Richtung **15.** Die konkaven Segmente **93, 94** können eine unterschiedliche Breite, d.h. Abmessung in Umfangsrichtung **22** aufweisen. Die aus den schmaleren Segmenten **94** gebildeten Kanäle können beispielsweise einer Zuführung von Luft und die aus den breiteren Segmenten **93** gebildeten Kanäle zum Absaugen von Luft verwendet werden. Statt Luft können auch andere Fluide zum Spülen, z.B. Wasser, eingesetzt werden. In einer Ausgestaltung sind die einen Rillen 27 nicht abgedeckt. Luft kann hierbei entlang der nicht abgedeckten Rillen in das Bohrloch einströmen, und das Bohrmehl durch die zu Kanälen abgedeckten Rillen abgesaugt werden.

Eine weitere nicht dargestellte Ausführungsform hat einen wendelförmigen Grundkörper. Konvexe Sektoren und konkave Sektoren sind wie in der vorhergehenden Ausführungsformen ausgebildet. Einzig die Anordnung der konkaven Segmente dreht sich in Umfangsrichtung längs der Achse. Eine längliche Abdeckung ist helixförmig ausgebildet. Die Abdeckung liegt auf dem konkaven Segment auf und schließt mit diesem einen helixförmigen Kanal ab. Die Abdeckung ist vollständig innerhalb der durch den Rotationskörpers des Grundkörpers definierte Hüllkurve angeordnet.

Ein beispielhaftes Herstellungsverfahren für den Bohrer **1** beginnt mit einem zylindrischen Rohling aus Stahl. Der Rohling hat etwa die Länge des späteren Bohrers **1.** In dem Bereich des späteren Schafts **4** werden längs der Achse **2,** z.B. parallel zu der Achse **2,** durchgehende Rillen **27** in den Rohling eingebracht. Die Rillen **27** erstrecken sich vorzugsweise über die gesamte Länge des späteren Schafts **4.** Eine Breite der Rillen **27,** d.h. ihre Abmessung in Umfangsrichtung **22,** liegt im Bereich zwischen 10 % und 25 % des Umfangs, d.h. ein Mittelpunktswinkel liegt im Bereich zwischen 30 Grad und 90 Grad.

Geschlossene und offene Nuten **17, 18** können in einem Endbereich für das Einsteckende **5** eingebracht werden. Vorzugsweise werden die Rillen und ggf. die Nuten mittels eines Umformverfahrens, z.B. durch Walzen, eingebracht. Insbesondere können die Rillen **27** durch ein Walzen längs der Achse **2** des Rohlings eingebracht werden. Vorzugsweise werden die Rillen **27** durch Rollwalzen eingebracht. Alternativ kann der Rohling ein Endlosdraht sein. Die Rillen **27** und ggf. die Nuten **17, 18** werden beispielsweise durch Längswalzen in den Rohling eingebracht. Von dem endlosen Rohling werden kontinuierlich die gewalzten Abschnitte abgeschnitten, d.h. abgelängte Rohlinge mit den Rillen **27** und Nuten **17, 18** erzeugt.

Durch die Stirnseite des Rohlings kann eine längs der Achse **2** verlaufende Bohrung zu der Rille **27** gebohrt werden. Die Bohrung kann schräg zu der Achse **2** verlaufen. Auf der Stirnseite **11** wird der Bohrkopf **3** befestigt. In die Stirnseite **11** kann eine Vertiefung **10** eingelassen werden, welche einen Schneidkörper **8** formschlüssig aufnimmt. Eine materialschlüssige Verbindung, z.B. durch Löten oder Schweißen, verbindet den Schneidkörper **8** mit dem Rohling.

Plattenförmige oder flächige Abdeckungen **50** werden in die Rillen **27** eingesetzt. Die gesamte Abdeckung **40** ist gegenüber einer zylindrischen Hüllkurve des Rohlings etwas zurückgesetzt. Eine Stanze kann entlang des Randes der Rillen **27** Kerben einprägen, um etwas Material in Umfangsrichtung **22** über die Abdeckung **40** zu schieben. Die dabei entstehenden Nasen **46** klemmen die Abdeckung **40** fest. Alternativ oder zusätzlich kann die Abdeckung **40** angeklebt werden.

Statt die Abdeckungen aufzusetzen, können diese auch aufgespritzt werden. Zuerst wird auf dem Boden **37** der Rillen **27** ein Opferkörper aus Paraffin aufgebracht. Der Opferkörper füllt die Rille **27** nur teilweise aus. Eine radiale Abmessung des Opferkörpers ist beispielsweise zwischen 25 % und 50 % der Tiefe der Rille **27** gewählt. Die Abmessungen des Opferkörpers sind im Wesentlichen komplementär zu dem herzustellenden Kanal. Insbesondere sind Teile der Flanken **46** nicht von dem Opferkörper bedeckt. Ein Kunststoff für die Abdeckung **40** wird in die Rille **27** und auf den Opferkörper aufgespritzt. Die Abdeckung **40** haftet an den nicht bedeckten Abschnitten der Flanken **46.** Der Kanal **50** wird durch Herauslösen des Opferkörpers, z.B. mit Aceton, freigelegt. Die Wahl des Opfermaterials wird in Hinblick auf den Kunststoff derart ausgewählt, dass ein selektiv wirkendes Lösungsmittel den Opferkörper auswaschen kann.

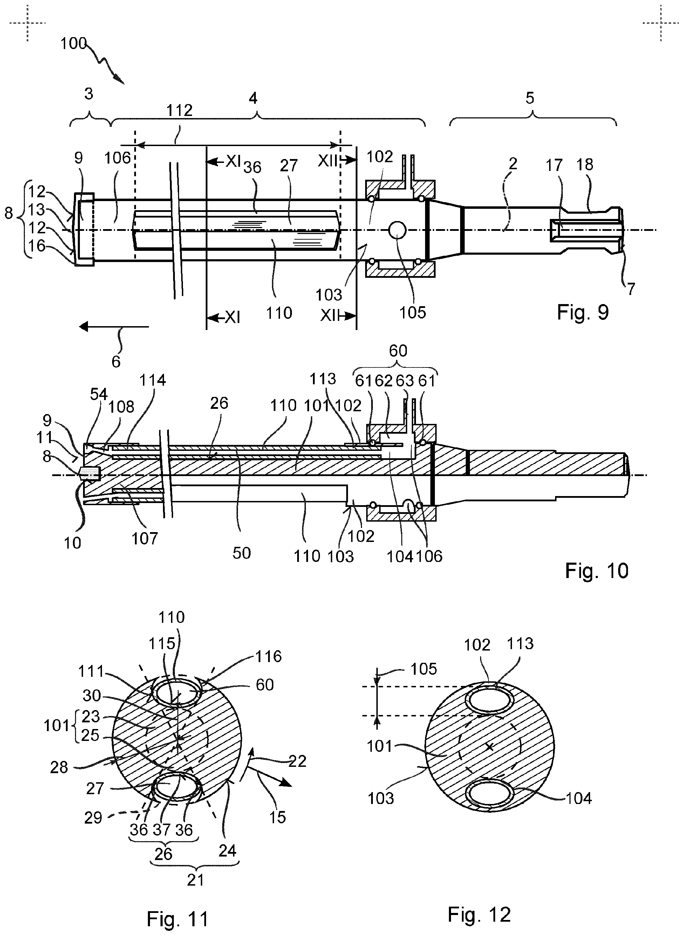

Fig. 9 zeigt eine weitere Ausführungsform eines Bohrers **100,** die nicht Teil der vorliegenden Erfindung ist, in einer Seitenansicht; Fig. 10 zeigt den Bohrer **100** teilweise angeschnitten in einer um 90 Grad zu der Ansicht von Fig. 9 gedreht. Fig. 11 ist ein Querschnitt in der Ebene XI-XI und Fig. 12 ein Querschnitt in der Ebene XII-XII.

Die Ausführungsform des Bohrers **100** hat eine Vielzahl mit den Ausführungsformen des Bohrers **1** übereinstimmende Merkmale, auf welche durch die Verwendung gleicher Bezugszeichen verwiesen wird. Der Bohrer **100** hat einen Bohrkopf **3,** einen Schaft **4** und ein Einsteckende **5,** für eine Beschreibung des Bohrkopfes **3** und des Einsteckendes **5** wird auf die vorhergehenden Ausführungen verwiesen.

Der Schaft **4** hat einen stabförmigen Grundkörper **101** mit konvexen Sektoren **23** und konkaven Sektoren **25.** Eine Mantelfläche **21** des Grundkörpers **101** hat entsprechend konvexe Segmente **24,** zwischen denen in Umfangsrichtung **22** konkave Segmente **26** angeordnet sind. Die konkaven Segmente **26** können eine gewölbte, z.B. zylindrische, Fläche aufweisen oder ebene Flächen aufweisen.

Ein hinteres stirnseitiges Endstück **102** schließt den Grundkörper **101** längs der Achse **2** entgegen der Bohrrichtung **6** ab. Die Mantelfläche **103** des Endstücks **102** ist vollständig konvex ausgebildet, vorzugsweise zylindrisch. Eine Länge des zylindrischen Endstücks **102** ist vorzugsweise geringer als 10 % der Länge des Schafts **4.** In axialer Verlängerung der konkaven Segmente **26** sind in das Endstück **102** Bohrungen **104** eingebracht. Die Bohrung **104** bildet eine umfänglich geschlossene Hülse aus. Eine Abmessung **105** der Bohrung **104** längs der radialen Richtung **15** des Bohrers **1** ist geringer als die Differenz des äußeren Radius **28** zu dem inneren Radius **30.** Eine radiale Bohrung **106** in dem Endstück **102** sticht die Hülse **104** an. Ein vorderes stirnseitiges Endstück **107** kann den Grundkörper **101** und insbesondere die konkaven Sektoren **26** in Bohrrichtung **6** abschließen. Axial oder teilweise axial verlaufende Bohrungen **108** sind in Verlängerung der konkaven Segmente **26** vorgesehen.

Der Kanal **50** des Schafts **4** enthält einen Schlauch **110,** welcher außen an dem Grundkörper **101** angeordnet ist. Fig. 9 zeigt eine Hälfte des Schlauchs **110** in der unteren Bildhälfte, während in der oberen Bildhälfte der Schlauch **110** herausgenommen ist. Eine Außenfläche **111** des Schlauchs **110** ist beispielsweise an dem konkaven Segment **26** der Mantelfläche **21** festgeklemmt. Der Schlauch **110** erstreckt sich vorzugsweise über die gesamte Länge **112** des konkaven Segmentes **26.** Ein hinteres Endstück **113** des Schlauchs **110** kann in die axiale Bohrung **104** des Endstücks **102** des Grundkörpers **101** eingesteckt sein. Ein vorderes Endstück **114** des Schlauchs **110** kann in die Bohrungen **108** nahe des Bohrkopfs **3** eingesteckt sein. Der Schlauch **110** hat vorzugsweise genau zwei Öffnungen, welche an dem vorderen Endstück **114** und dem hinteren Endstück **113** vorgesehen sind. Entlang einer Verbindunglinie der beiden Endstücke **113, 114** ist der Schlauch **110** umfänglich, d.h. in den längs der Verbindungslinien senkrechten Richtung, vollständig durch eine Innenfläche **115** geschlossen. Die Innenflächen **115** des Schlauchs **110** sind zugleich Wandflächen des Kanals **50.**

Der Schlauch **110** ist beispielweise aus Gummi, einem gewebten Textil oder einem gummierten, gewebten Textil ausgebildet. Eine Befestigung des Schlauchs **110** kann beispielsweise durch Einklemmen in der durch die Bohrung **104** ausgebildeten Hülse in dem Endstück **102** des Grundkörpers **101** erfolgen. Weiters kann der Schlauch **110** an dem Grundkörper **101** angeklebt werden. Ferner kann der Schlauch **110** in dem konkaven Segment **26** eingeklemmt sein und z.B. durch überhängende Flanken **116** oder in Umfangsrichtung **22** vorspringende Nasen in radialer Richtung gesichert sein.

Der Schlauch **110** liegt innerhalb der zylindrischen Hüllkurve **29,** welche bei einer Rotation des Grundkörpers **101** um seine Achse **2** entsteht. Die Abmessung **105** des Schlauchs **110** ist entsprechend geringer als die Differenz des äußeren Radius **28** zu dem inneren Radius **30** gewählt.

Ein Herstellungsverfahren für den Bohrer **100** beginnt mit einem zylindrischen Rohling. Der Rohling hat beispielsweise eine dem späteren Außendurchmesser **28** entsprechenden Durchmesser. Eine Länge des Rohlings kann etwa der Länge des herzustellenden Bohrers **100** entsprechen. In eine Mantelfläche **21** des Rohlings werden Rillen **27** gefräst. Die Rillen **27** verlaufen vorzugsweise parallel zu der Achse **2** des Rohlings. Die Rillen **27** sind in wenigstens einer Richtung längs der Achse **2** geschlossen, in welche sich das Einsteckende **5** anschließen wird. Ein Schlauch **110** wird in die Rillen **27** eingesetzt. Der Schlauch **110** ist vorzugsweise so lang wie die Rillen **27.** Die Rillen **27** und der Schlauch **110** bilden einen Schaft **3** des Bohrers **100.**

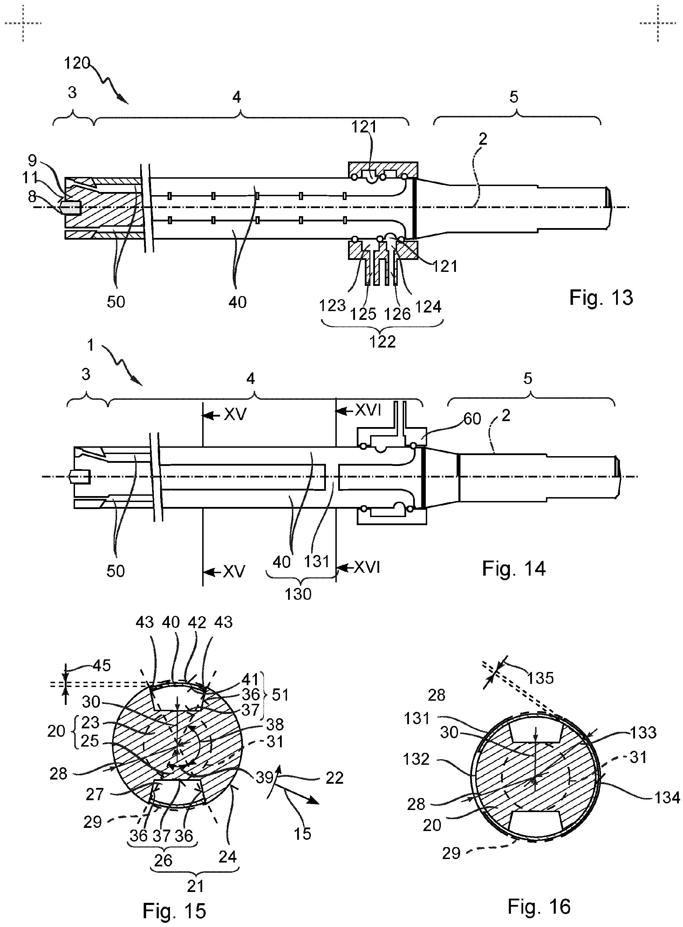

Fig. 13 zeigt eine weitere Ausführungsform des Bohrers **120** mit zwei getrennten Kanälen **50.** Auf eine Wiederholung einer Beschreibung der übereinstimmenden Merkmale dieser und der vorhergehenden Ausführungsformen wird verzichtet. Soweit die nachfolgende Beschreibung keine Unterschiede aufzeigt, ist von einem identischen oder analogen Aufbau der nicht beschriebenen Merkmale auszugehen, insbesondere wenn mit den vorherigen Ausführungsformen übereinstimmende Bezugszeichen gewählt sind. Die Ansaugöffnungen **121** der beiden Kanäle **50** sind längs der Achse **2** versetzt angeordnet. Eine Manschette **122** für den Bohrer **120** kann über den Schaft **4** im Bereich der Ansaugöffnung **121** gestülpt werden. Die Manschette **122** hat einen ersten ringförmigen Hohlraum **123,** welcher längs der Achse **2** mit einer der Ansaugöffnungen **121** überlappt, und einen zweiten ringförmigen Hohlraum **124,** welche längs der Achse **2** mit der anderen der Ansaugöffnungen **121** überlappt. Die beiden Hohlräume **123, 124** sind voneinander getrennt. Jeder der Hohlräume **123, 124** kann durch einen eigenen Anschlussstutzen **125, 126** mit einer Luftfördereinrichtung verbunden werden. Beispielsweise kann der eine Kanal **50** Luft in ein Bohrloch blasen und das Bohrgut über den anderen Kanal **50** abgesaugt werden.

Die Bohrer **1** können einen oder mehrere Kanäle **50** aufweisen. Bei den dargestellten Ausführungsformen sind die Kanäle **50** voneinander getrennt, insbesondere durch die konvexen Sektoren **23** über die gesamte Länge des Schafts **4** getrennt. Eine weitere Ausführungsform sieht, vor dass die Kanäle **50** an ihrer Endabschnitten nahe dem Bohrkopf **3** oder nahe dem Einsteckende **5** zusammengeführt sind. Beispielsweise kann eine ringförmige Nut in dem Grundkörper **20** die Kanäle **50** verbinden.

Fig. 14 zeigt eine weitere Ausführungsform des Bohrers **1** in einer Seitenansicht, Fig. 15 ist ein Schnitt durch den Schaft **4** in der Ebene XV-XV, Fig. 16 ein Schnitt durch den Schaft **4** in der Ebene XVI-XVI. Auf eine Wiederholung einer Beschreibung der übereinstimmenden Merkmale dieser und der vorhergehenden Ausführungsformen wird verzichtet. Soweit die nachfolgende Beschreibung keine Unterschiede aufzeigt, ist von einem identischen oder analogen Aufbau der nicht beschriebenen Merkmale auszugehen, insbesondere wenn mit den vorherigen Ausführungsformen übereinstimmende Bezugszeichen gewählt sind. Die Mantelfläche **21** des Grundkörpers **20** hat wenigstens zwei voneinander getrennte konkave Segmente **26,** entsprechend sind zwei oder mehr Kanäle **50** in dem Schaft **4** ausgebildet. Eine Abdeckung **130** verschließt die konkaven Segmente **26** zu den Kanälen **50.** Die Abdeckung **130** hat längliche, sich entlang der Achse **2** erstreckende plattenförmige Schalen **40.** Der Aufbau dieser Schalen **40** kann den Abdeckungen **40** der vorhergehenden Ausführungsformen entsprechen. Die Schalen **40** liegen auf den sich längs der Achse **2** erstreckenden konkaven Segmenten **26** auf. Die Schalen **40** sind insbesondere vollständig innerhalb der zylindrischen Hüllkurve **29** des Grundkörpers **20** angeordnet.

Ein Ring **131** der Abdeckung **130** verbindet die Schalen **40** zu einem zusammenhängenden Körper. Die Abdeckung **130** kann monolitisch sein, z.B. ist Abdeckung **130** ein Spritzgussteil. Alternativ kann der Ring **131** an die Schalen **40** angeklebt oder angeschweißt werden. Der Ring **131** kann aus Kunststoff, vorzugsweise aus dem gleichen Kunststoff wie die Schalen **40** sein. Der Ring **131** kann vollständig umfänglich geschlossen oder wie dargestellt geschlitzt sein.

In den Grundkörper **20** ist eine ringförmige Vertiefung **132** um die Achse **2** eingelassen. Die Abmessungen der Vertiefung **132** sind komplementär zu dem Ring **131** ausgelegt. Insbesondere sind die Abmessungen längs der Achse **2** gleich gewählt. Ein äußerer Radius **133** des Rings **131** ist vorzugsweise geringer als der äußerer Radius **28** des Grundkörpers **20.** Der Ring **131** ist somit gegenüber der Hüllkurve **28** zurückgesetzt. Eine nach innenweisende Fläche **134** des Rings **131** liegt vorzugsweise an dem Grundkörper **20** an. Eine Stärke **135** des Rings **131** ist beispielsweise gleich oder etwa gleich der Stärke **45** der Schalen **40.**

## Patentansprüche

1. Bohrer für einen bohrmeißelnden Abbau von Gestein oder mineralischen Materialien, mit einem Bohrkopf (**3**),
einem Schaft (**4**), welcher einen Grundkörper (**20**), an dem der Bohrkopf (**3**) befestigt ist, einen Aufsatz (40), der an einer Mantelfläche (**21**) des Grundkörpers (**20**) befestigt und vollständig innerhalb einer den Grundkörper (**20**) umschreibenden zylindrischen Hüllkurve (**29**) angeordnet ist, und
einen innenliegenden Kanal (**50**), der zwischen dem Aufsatz (**40**) und der Mantelfläche (**21**) ausgebildet ist, beinhaltet, wobei der Bohrkopf (3) einen Schneidkörper (8) mit zwei in Bohrrichtung (6) weisenden, dachförmig ausgebildeten Meißelkanten (12) hat, **dadurch gekennzeichnet dass**, der Schneidkörper (**8**) aus einem gesinterten Hartmetall ist, und wobei der Aufsatz (**40**) plattenförmig ausgebildet ist.

2. Bohrer nach Anspruch 1, **dadurch gekennzeichnet, dass** der Kanal (**50**) von einer ersten Öffnung an einem an den Bohrkopf (**3**) angrenzenden Ende des Schafts (**4**) zu einer zweiten Öffnung an einem an ein Einsteckende (**5**) angrenzenden Ende des Schafts (**4**) verläuft.

3. Bohrer nach Anspruch 2, **dadurch gekennzeichnet, dass** der Aufsatz von der ersten Öffnung bis zu der zweiten Öffnung ausgedehnt ist.

4. Bohrer nach einem der vorhergehenden Ansprüche, **dadurch gekennzeichnet, dass** die Mantelfläche (**21**) des Grundkörpers (**20**) wenigstens ein längs der Achse (**2**) ausgedehntes, in Umfangsrichtung (**22**) konkaves Segment (**26**) aufweist und der Aufsatz (40) an dem konkaven Segment (**26**) anliegt.

5. Bohrer nach Anspruch 4, **dadurch kennzeichnet, dass** ein Anteil der konvexen Segmente **24** an einem Umfang des Grundkörpers **20** größer als 25 % ist.

6. Bohrer nach Anspruch 5, **dadurch gekennzeichnet, dass** der Aufsatz (**40**) eine plattenförmige Abdeckung (**40**) enthält, die an zwei in Umfangsrichtung beabstandeten, einander zugewandten Flanken (**36**) des konkaven Segmentes (**26**) anliegt.

7. Bohrer nach Anspruch 6, **dadurch gekennzeichnet, dass** die Abdeckung (**40**) durchgehend entlang einer Ausdehnung der Flanken (**36**) längs einer Achse (**2**) des Bohrers (**1**) an den Flanken (**36**) anliegt.

8. Bohrer nach einem der Ansprüche 6 oder 7, **dadurch gekennzeichnet, dass** eine zu einer Achse (**2**) des Bohrers (**1**) weisende Fläche (**51**) der Abdeckung (**40**) und das konkave Segment (**26**) Innenflächen des Kanals (**50**) sind.

9. Bohrer nach einem der vorhergehenden Ansprüche, **dadurch gekennzeichnet, dass** die Abdeckung (**40**) aus Kunststoff ist.

10. Bohrer nach Anspruch 1, **dadurch gekennzeichnet, dass** ein durch den sich um die Achse (**2**) drehenden Grundkörper (**20**) definierter Rotationskörper einen äußeren Radius definiert, und eine in den Grundkörper (**20**) eingeschriebener, die Mantelfläche (**21**) berührende, zylindrische Seele (**31**) einen inneren Radius (**30**) definiert, wobei der innere Radius (**30**) zwischen 25 % und 75 % des äußeren Radius (**28**) beträgt.

11. Herstellungsverfahren für einen Bohrer mit den Schritten:
Einbringen wenigstens einer Rille (**27**) in einen zylindrischen Rohling, wobei die Rille (**27**) parallel zu einer Achse (**2**) des Rohlings orientiert ist;
Aufbringen eines plattenförmigen Aufsatzes (**40**) auf der Rille (**27**), wobei zwischen dem Aufsatz (**40**) und der Mantelfläche (**21**) ein längs der Rille (**27**) verlaufender Kanal (**50**) ausgebildet wird, und wobei der Aufsatz (**40, 110**) vollständig innerhalb einer den Grundkörper (**20**) umschreibenden zylindrischen Hüllkurve (**29**) angeordnet wird; und Anordnen eines Schneidelements an einer Stirnseite des Rohlings.

12. Herstellungsverfahren nach Anspruch 11, **dadurch gekennzeichnet, dass** die Rille (**27**) durch ein spanloses Umformungsverfahren in den Rohling eingebracht wird.

13. Herstellungsverfahren nach Anspruch 11 oder 12, **dadurch gekennzeichnet, dass** der Rohling nach dem Einbringen der Rillen (**27**) auf eine Länge des herzustellenden Bohrers (1) abgelängt wird.

14. Herstellungsverfahren nach einem der Ansprüche 11 bis 12, **dadurch gekennzeichnet, dass** der Aufsatz in der Rille (**27**) eingesetzt und materialschlüssig und/oder formschlüssig befestigt wird.

15. Herstellungsverfahren nach einem der Ansprüche 11 bis 14, **dadurch gekennzeichnet, dass** ein Opferkörper auf die Rille (**27**) aufgebracht wird, der Opferkörper zum Ausbilden des Aufsatzes umspritzt und der Opferkörper zum Ausbilden des Kanals (50) entfernt wird.

## Claims

1. Drill bit for breaking down rock or mineral materials by drilling and chiselling, with a drill head (3),
with a shaft (4) which comprises a basic body (20) to which the drill head (3) is fastened, an attachment (40) which is fastened to a lateral surface (21) of the basic body (20) and is arranged completely within a cylindrical envelope (29) circumscribing the basic body (20), and an internal channel (50) which is formed between the attachment (40) and the lateral surface (21), wherein the drill head (3) has a cutting body (8) with two chisel edges (12) which face in the drilling direction (6) and are in the shape of a roof, **characterized in that** the cutting body (8) is made of a sintered hard metal, wherein the attachment (40) is of a plate-like design.

2. Drill bit according to Claim 1, **characterized in that** the channel (50) runs from a first opening at an end of the shaft (4) adjacent to the drill head (3) to a second opening at an end of the shaft (4) adjacent to a shank (5).

3. Drill bit according to Claim 2, **characterized in that** the attachment is extended from the first opening as far as the second opening.

4. Drill bit according to one of the preceding claims, **characterized in that** the lateral surface (21) of the basic body (20) has at least one segment (26) which is extended along the axis (2) and is concave in the circumferential direction (22), and the attachment (40) lies on the concave segment (26).

5. Drill bit according to Claim 4, **characterized in that** a proportion of the convex segments (24) on a circumference of the basic body (20) is greater than 25%.

6. Drill bit according to Claim 5, **characterized in that** the attachment (40) contains a plate-like covering (40) which lies on two flanks (36) of the concave segment (26) that are spaced apart in the circumferential direction and face one another.

7. Drill bit according to Claim 6, **characterized in that** the covering (40) lies on the flanks (36) continuously along an extent of the flanks (36) along an axis (2) of the drill bit (1).

8. Drill bit according to either of Claim 6 and 7, **characterized in that** a surface (51) of the covering (40) facing an axis (2) of the drill bit (1) and the concave segment (26) are inner surfaces of the channel (50).

9. Drill bit according to one of the preceding claims, **characterized in that** the covering (40) is made of plastic.

10. Drill bit according to Claim 1, **characterized in that** a rotational body defined by the basic body (20) rotating about the axis (2) defines an outer radius, and a cylindrical core (31) which is inscribed in the basic body (20) and is in contact with the lateral surface (21) defines an inner radius (30), wherein the inner radius (30) is between 25% and 75% of the outer radius (28).

11. Production method for a drill bit, with the following steps:
introducing at least one flute (27) into a cylindrical blank, wherein the flute (27) is oriented parallel to an axis (2) of the blank;
placing a plate-like attachment (40) on the flute (27), wherein a channel (50) running along the flute (27) is formed between the attachment (40) and the lateral surface (21), and wherein the attachment (40, 110) is completely arranged within a cylindrical envelope (29) circumscribing the basic body (20); and
arranging a cutting element on an end side of the blank.

12. Production method according to Claim 11, **characterized in that** the flute (27) is introduced into the blank by a non-cutting shaping process.

13. Production method according to Claim 11 or 12, **characterized in that**, after the flutes (27) have been introduced, the blank is cut to a length of the drill bit (1) to be produced.

14. Production method according to either of Claims 11 and 12, **characterized in that** the attachment is inserted in the flute (27) and fastened in a material bonded and/or formfitting manner.

15. Production method according to one of Claims 11 to 14, **characterized in that** a sacrificial body is placed onto the flute (27), the sacrificial body is insert moulded in order to form the attachment, and the sacrificial body is removed in order to form the channel (50).

## Revendications

1. Foret pour une destruction au trépan de pierre ou de matériaux minéraux,
muni d'une tête de forage (3),
d'une tige (4), qui contient un corps de base (20), auquel la tête de forage (3) est fixée, une coiffe (40), qui est fixée sur une surface d'enveloppe (21) du corps de base (20) et est agencée entièrement à l'intérieur d'une courbe enveloppante cylindrique (29) qui circonscrit le corps de base (20), et
un canal intérieur (50), qui est formé entre la coiffe (40) et la surface d'enveloppe (21), la tête de forage (3) ayant un corps de coupe (8) muni de deux bords de burin (12) configurés en forme de toit, dirigés dans la direction de forage (6),
**caractérisé en ce que**
le corps de coupe (8) est en un métal dur fritté, et
la coiffe (40) est configurée en forme de plaque.

2. Foret selon la revendication 1, **caractérisé en ce que** le canal (50) s'étend depuis une première ouverture au niveau d'une extrémité de la tige (4) adjacente à la tête de forage (3) jusqu'à une deuxième ouverture au niveau d'une extrémité de la tige (4) adjacente à une extrémité d'insertion (5).

3. Foret selon la revendication 2, **caractérisé en ce que** la coiffe est étendue depuis la première ouverture jusqu'à la deuxième ouverture.

4. Foret selon l'une quelconque des revendications précédentes, **caractérisé en ce que** la surface d'enveloppe (21) du corps de base (20) comprend au moins un segment concave (26) dans la direction périphérique (22), étendu longitudinalement à l'axe (2), et la coiffe (40) s'applique contre le segment concave (26).

5. Foret selon la revendication 4, **caractérisé en ce qu'**une proportion des segments convexes (24) sur une périphérie du corps de base (20) est supérieure à 25 %.

6. Foret selon la revendication 5, **caractérisé en ce que** la coiffe (40) contient un couvercle en forme de plaque (40), qui s'applique contre deux flancs (36), espacés dans la direction périphérique, tournés l'un vers l'autre, du segment concave (26).

7. Foret selon la revendication 6, **caractérisé en ce que** le couvercle (40) s'applique sur les flancs (36) en continu le long d'une étendue des flancs (36) longitudinalement à un axe (2) du foret (1).

8. Foret selon l'une quelconque des revendications 6 ou 7, **caractérisé en ce qu'**une surface (51) du couvercle (40) dirigée vers un axe (2) du foret (1) et le segment concave (26) sont des surfaces intérieures du canal (50).

9. Foret selon l'une quelconque des revendications précédentes, **caractérisé en ce que** le couvercle (40) est en matière plastique.

10. Foret selon la revendication 1, **caractérisé en ce qu'**un corps de rotation défini par le corps de base (20) tournant autour de l'axe (2) définit un rayon extérieur, et une âme cylindrique (31), en contact avec la surface d'enveloppe (21), inscrite dans le corps de base (20), définit un rayon intérieur (30), le rayon intérieur (30) étant entre 25 % et 75 % du rayon extérieur (28).

11. Procédé de fabrication d'un foret comprenant les étapes suivantes :
l'aménagement d'au moins une rainure (27) dans une ébauche cylindrique, la rainure (27) étant orientée parallèlement à un axe (2) de l'ébauche ;
l'application d'une coiffe en forme de plaque (40) sur la rainure (27), un canal (50) s'étendant longitudinalement à la rainure (27) étant formé entre la coiffe (40) et la surface d'enveloppe (21), et la coiffe (40, 110) étant agencée entièrement à l'intérieur d'une courbe enveloppante cylindrique (29) qui circonscrit le corps de base (20) ; et l'agencement d'un élément de coupe sur un côté frontal de l'ébauche.

12. Procédé de fabrication selon la revendication 11, **caractérisé en ce que** la rainure (27) est aménagée dans l'ébauche par un procédé de formage sans enlèvement de copeaux.

13. Procédé de fabrication selon la revendication 11 ou 12, **caractérisé en ce qu'**après l'aménagement des rainures (27), l'ébauche est sectionnée à une longueur du foret à fabriquer (1).

14. Procédé de fabrication selon l'une quelconque des revendications 11 à 12, **caractérisé en ce que** la coiffe est insérée dans la rainure (27) et fixée par accouplement de matériau et/ou par accouplement de forme.

15. Procédé de fabrication selon l'une quelconque des revendications 11 à 14, **caractérisé en ce qu'**un corps sacrificiel est appliqué sur la rainure (27), le corps sacrificiel est surmoulé pour la formation de la coiffe et le corps sacrificiel est éliminé pour la formation du canal (50).
